# EUROPEAN PATENT APPLICATION

(11) **EP 3 792 784 A1**
(43) Date of publication of application: **17.03.2021**
(21) Application number: 19920626.9
(22) Date of filing: 22.08.2019
(51) Int. Cl.: G06F 16/35

(54) **SERVICE SYSTEM UPDATE METHOD, ELECTRONIC DEVICE AND READABLE STORAGE MEDIUM**

(30) Priority: 11.07.2019 CN 201910624509
(71) Applicant: Wangsu Science & Technology Co., Ltd., Shanghai 200030 (CN)
(72) Inventor: CAI, Zijan, Shanghai 200030 (CN); WANG, Fuwei, Shanghai 200030 (CN)
(74) Representative: Vinsome, Rex Martin
(86) International application number: PCT/CN2019/102059
(87) International publication number: WO 2021/003810

(57) **Abstract**

Some embodiments of the present disclosure relate to Internet technologies and disclose a method for updating a service system, an electronic device, and a readable storage medium. In some embodiments of the present disclosure, the method for updating the service system includes the following steps: acquiring training language materials generated by the service system in a service process, and storing the training language materials in a corpus; updating the service system after it is determined data in the corpus meets a first preset requirement; where the first preset requirement is that the data in the corpus is greater than a first threshold, or the data in the corpus grows faster than a second threshold.

## Description

### CROSS-REFERENCE TO RELATED APPLICATIONS

The present disclosure refers to Chinese Patent Application No. 201910624509.6, entitled "METHOD FOR UPDATING SERVICE SYSTEM, ELECTRONIC DEVICE, AND READABLE STORAGE MEDIUM" filed on July 11, 2019, which is incorporated by reference herein in its entirety.

### TECHNICAL FIELD

The present disclosure relates to Internet technologies, and in particular, to a method for updating a service system, an electronic device, and a readable storage medium.

### BACKGROUND

The 21 st century is the century of artificial intelligence (AI). Many artificial intelligence products are coming up, which greatly improves business efficiency and saves labor costs. However, it is well known that even a first-class Internet industry has a conservative attitude toward making great efforts to research, develop, and maintain large-scale intelligent products. The reason is actually very simple, i.e., although AI products can bring many advantages, defects thereof are also ubiquitous.

### SUMMARY

Some embodiments of the present disclosure are intended to provide a method for updating a service system, an electronic device, and a readable storage medium, so that the service system can be updated iteratively.

Some embodiments of the present disclosure provide a method for updating a service system, including the following steps: acquiring training language materials generated by the service system in a service process, and storing the training language materials in a corpus; updating the service system after determining that data in the corpus meets a first preset requirement; where the first preset requirement is that the data in the corpus is greater than a first threshold, or the data in the corpus grows faster than a second threshold.

Some embodiments of the present disclosure further provide an electronic device, including: at least one processor; and a memory in communicative connection with the at least one processor; where the memory stores instructions executable by the at least one processor, and the instructions are executed by the at least one processor to cause the at least one processor to perform the method for updating the service system in the embodiments described above.

Some embodiments of the present disclosure further provide a computer readable storage medium storing a computer program, and the computer program, when executed by a processor, performs the method for updating the service system in the embodiments described above.

Compared with the existing technologies, in some embodiments of the present disclosure, the service system automatically triggers an update task when the corpus meets the first preset requirement, so that the service system may determine its update time according to its condition, to make an update period better conform to an iteration (update) requirement of the service system itself, thereby preventing a developer from frequently updating the service system or forgetting to update the service system. In addition, the training language materials in the corpus comes from the service process of the service system, therefore the update process is more targeted compared with a method for acquiring the training language materials from the outside.

For example, a service component of the service system includes a business component, and the corpus includes a knowledge corpus; acquiring the training language materials generated by the service system in the service process, and storing the training language materials in the corpus includes: extracting first request data and first matching data from a first data set of the business component, where the first matching data includes first question data and/or first answer data which match/matches the first request data in the business component; determining the training language materials according to the first request data and the first matching data that are extracted; and storing the training language materials in the knowledge corpus. In this implementation, the update process is more targeted due to that the training language materials of the business component come from an online environment of the service system.

For example, determining the training language materials according to the first request data and the first matching data that are extracted includes: auditing the first request data and the first matching data that are extracted; judging whether audit is passed; determining that a first label of the first request data that is extracted indicates that the first request data fails to be matched, if it is judged that the audit is not passed; and using the first request data that is extracted, the first matching data of the first request data that is extracted, and the first label of the first request data that is extracted as the training language materials. In this implementation, the extracted first request data and first matching data are audited to ensure accuracy of the training language materials, thereby further ensuring service performance of an updated business component.

For example, the first request data that is extracted includes request data to which the business component fails to respond; if it is judged that the audit is passed, the method for updating the service system further includes: determining that the first label of the first request data that is extracted indicates that the first request data is successfully matched; and using the first request data that is extracted, the first matching data of the first request data that is extracted, and the first label of the first request data that is extracted as the training language materials. In this implementation, the business component is updated based on the request data to which the business component fails to respond, thereby improving service performance of the business component.

For example, the service component of the service system further includes an intent classification component, and the corpus further includes an intent classification corpus; before determining that a first label of the first request data that is extracted indicates that the first request data fails to be matched, the method for updating the service system further includes: judging whether the first request data that is extracted is correctly classified; auditing the first request data and the first matching data that are extracted if it is judged that the first request data that is extracted is correctly classified; determining that a second label of the first request data that is extracted indicates that the first request data is a non-business class request, if it is judged that the first request data that is extracted is incorrectly classified; and storing the first request data that is extracted and the second label of the first request data that is extracted in the intent classification corpus. In this implementation, a corresponding component is updated in a targeted manner, thereby improving service performance of the service system.

For example, after storing the training language materials in the knowledge corpus, the method for updating the service system further includes: re-extracting the first request data from the first request data that fails to be responded and storing the first request data that is re-extracted in the knowledge corpus, if it is determined that the first request data that is successfully matched in the knowledge corpus is more than the first request data that fails to be matched; and re-extracting the first request data from the first request data that is successfully responded and storing the first request data that is re-extracted in the knowledge corpus, if it is determined that the first request data that is successfully matched in the knowledge corpus is less than the first request data that fails to be matched. In this implementation, balance between the training language materials indicating that the matching succeeds and the training language materials indicating that the matching fails in the knowledge corpus is ensured, thereby preventing the trained business component from edge solidification.

For example, a working process of the business component includes: acquiring business request data; preprocessing the business request data; and inputting the business request data that is preprocessed into a matching module to obtain business answer data; where the matching module is determined according to training request data and training answer data.

For example, a process that the business component preprocesses the business request data includes: cleaning the business request data; and extracting a feature of the business request data that is cleaned to obtain a sentence vector or a word vector of the business request data.

For example, the business component includes a matching model, and the matching model includes T matching sub-models, where T is a positive integer greater than 1; and a processing logic of the matching model includes: using an input of the matching model as an input of a 1^{th} matching sub-model, using an output of an *i*^{th} matching sub-model as an input of an (*i*+1)^{th} matching sub-model, and using an output of a *T*^{th} matching sub-model as an output of the matching model, where 1 ≤ *i* < T; or inputting the input of the matching model into the T matching sub-models respectively, and determining the output of the matching model according to the output of the T matching sub-models. In this implementation, the business component uses a multi-layer cascaded or single-layer merged structure, thereby improving accuracy of an output matching result.

For example, in the T matching sub-models, matching algorithms of M matching sub-models are fuzzy matching algorithm, and matching algorithms of N matching sub-models are precise matching algorithms, where M and N are positive integers, and M + N = T. In this implementation, matching is simultaneously performed through the fuzzy matching algorithm and the precise matching algorithm, thereby improving a probability of successful matching.

For example, updating the service system includes: determining a question to be extended according to the first request data of which the first label indicates that matching fails in the knowledge corpus; acquiring answer data corresponding to the question to be extended; and updating the knowledge corpus of the business component according to the question to be extended and the answer data corresponding to the question to be extended.

For example, a service component of the service system includes a non-business component, and the corpus includes a non-business template corpus; acquiring the training language materials generated by the service system in the service process and storing the training language materials in the corpus includes: acquiring second request data to which the non-business component fails to respond; auditing the second request data and the second answer data corresponding to the second request data; and storing the second request data and the second answer data in the non-business template corpus if the audit of the second request data and the second answer data is passed. In this implementation, the non-business template corpus is expanded and the number of the templates in the non-business template corpus is increased, thereby improving a probability of the successful matching of the non-business component, and further improving service performance of the service system.

For example, the service component of the service system further includes an intent classification component, and the corpus further includes an intent classification corpus; if the audit of the second request data and the second answer data is not passed, the method for updating the service system further includes: judging whether intent classification of the second request data is incorrect; determining that a second label of the second request data indicates that the second request data is a business class request and storing the second request data and the second label of the second request data in the intent classification corpus, if the intent classification of the second request data is incorrect. In this implementation, a corresponding component is updated in a targeted manner, thereby improving service performance of the service system.

For example, a working process of the non-business component includes: acquiring non-business request data; preprocessing the non-business request data; and matching the non-business request data that is preprocessed with a template in the non-business template corpus; and responding to the non-business request data according to a matching result.

For example, a working process of the intent classification component includes: performing the intent classification on request data that is received; calling the business component if the request data is identified as the business class request; or calling the non-business component if the request data is identified as the non-business class request.

For example, updating the service system includes: training the service component of the service system based on the training language materials in the corpus.

For example, the intent classification component includes an intent classification model, and a process that the intent classification component performs the intent classification on the request data that is received includes: inputting the request data that is received into the intent classification model; where an unknown parameter in the intent classification model is obtained through training according to training data, and the training data includes training request data as an input and a second label of the training request data as an output; and determining that the request data that is received is the business class request or the non-business class request according to the output of the intent classification model.

For example, the training language materials includes third request data received by the service system, and the corpus is a request data set; and updating the service system includes: calling a data mining algorithm to perform data mining on a second data set so as to obtain a first mining result, where the second data set is a sampling data set of a third data set, and the third data set includes all the third request data generated by the service system in the service process; feeding back the first mining result obtained through the data mining algorithm to a developer; determining the data mining algorithm selected by the developer; calling the data mining algorithm that is selected to perform the data mining on the third data set so as to obtain a data mining component; and updating the service system to enable the service system that is updated to call the data mining component. In this implementation, extension and reduction of components of the service system are realized through mining the request data and the answer data in an online environment of the service system.

For example, before calling the data mining algorithm to perform the data mining on the second data set so as to obtain the first mining result, the method for updating the service system further includes: determining text data generated by the service system in the service process according to a log file of the service system; cleaning the text data; and determining the third data set according to the text data that is cleaned.

For example, after determining the third data set according to the text data that is cleaned and before calling the data mining algorithm to perform the data mining on the second data set so as to obtain the first mining result, the method for updating the service system further includes: extracting the third request data from the third data set according to a preset extraction rule; and determining the second request data set according to the third request data that is extracted.

For example, the data mining component includes: any one or any combination of a user portrait mining component, a service quality mining component, a user behavior prediction component, a real-time hot spot tracking component, a sentence pattern template collection component, an expansion component, and a human intervention alarm component.

For example, a working process of the user portrait mining component includes: mining input data of the user portrait mining component through a knowledge graph algorithm or a keyword extraction algorithm to obtain a third mining result; and determining user portraits of each user according to the third mining result; the working process of the service quality mining component includes: analyzing the input data of the service quality mining component through a word vector characterizing transfer learning algorithm or a classifier based on a self-attention mechanism to determine an emotion score of the input data of the service quality mining component; and determining a quality score of the service system according to the emotion score; the working process of the user behavior prediction component includes: analyzing the input data of the user behavior prediction component through a time sequence prediction algorithm to obtain behavior pattern information of each user; and predicting behavior information of each user based on the behavior pattern information of each user; the working process of the real-time hot spot tracking component includes: extracting a keyword in the input data of the real-time hot spot tracking component through the keyword extraction algorithm; and determining a hotspot question in the input data of the real-time hot spot tracking component according to the keyword that is extracted; the working process of the sentence pattern template collection component includes: matching the input data of the sentence pattern template collection component with a target sentence pattern to obtain matching data that matches the target sentence pattern; and determining an extended sentence pattern template according to the matching data; the working process of the human intervention alarm component includes: monitoring a preset monitoring parameter, and performing a preset operation corresponding to the monitoring parameter when the monitoring parameter meets a second preset requirement corresponding to the monitoring parameter; where the monitoring parameter includes the quality score of the service system; and a preset operation corresponding to the quality score of the service system includes: switching the service system to a human service; and the working process of the expansion component includes: acquiring data of any one or any combination of the behavior information of each user predicted by the user behavior prediction component, the hotspot question determined by the real-time hot spot tracking component, and the sentence pattern template collected by the sentence pattern template collection component; determining expansion data and the corpus corresponding to the expansion data according to the data that is acquired; and archiving the expansion data into the corpus corresponding to the expansion data.

### BRIEF DESCRIPTION OF THE DRAWINGS

One or more embodiments are described as examples with reference to the corresponding figures in the accompanying drawings, and the examples do not constitute limitations to the embodiments.
FIG. 1 is a flowchart of a method for updating a service system according to some embodiments of the present disclosure;
FIG. 2 is a schematic diagram of interaction between each module of a business component according to some embodiments of the present disclosure;
FIG. 3 is a schematic diagram of interaction between each module of a non-business component according to some embodiments of the present disclosure;
FIG. 4 is a flowchart of a method for updating another service system according to some embodiments of the present disclosure;
FIG. 5 is a schematic diagram of an operation process of a service system according to some embodiments of the present disclosure;
FIG. 6 is a schematic structure of an update apparatus of a service system according to some embodiments of the present disclosure; and
FIG. 7 is a schematic structure of an electronic device according to some embodiments of the present disclosure.

### DETAILED DESCRIPTION

In order to clarify objectives, technical solutions, and advantages of the embodiments of the present disclosure, the embodiments of the present disclosure will be further described in details with reference to the accompanying drawings. Those skilled in the art may understand that many technical details are provided in the embodiments of the present disclosure to help readers better understand the present disclosure. However, the technical solutions claimed in the present disclosure may also be implemented without these technical details and various changes and modifications based on the following embodiments.

During implementation of some embodiments of the present disclosure, the inventor found that an existing method for updating a service system cannot meet basic requirements for iteration. Therefore, some embodiments of the present disclosure provide a new method for updating the service system to resolve the problem described above.

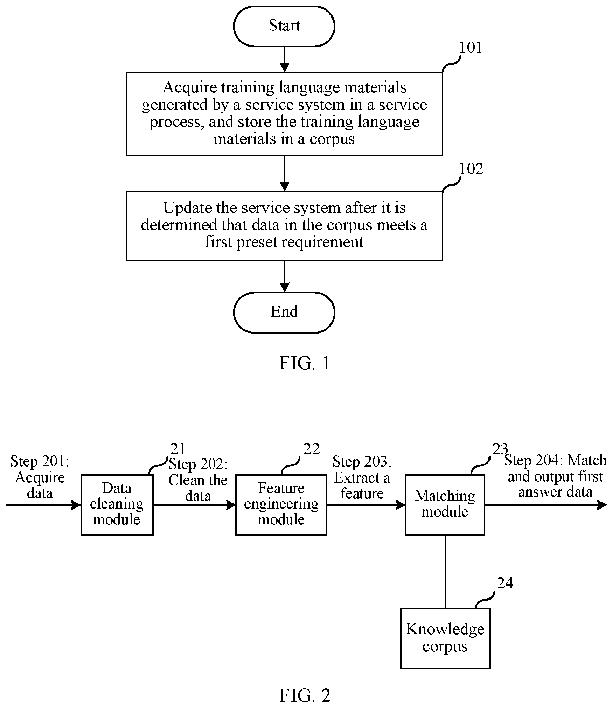

Some embodiments of the present disclosure relate to a method for updating a service system, applied to the service system, such as a human customer service system or the like. As shown in FIG. 1, the method for updating the service includes the following steps.

In step 101, training language materials generated by the service system in a service process are acquired, and the training language materials are stored in a corpus.

Specifically, the service system provides service in an online environment, acquires the training language materials based on data in the online environment, and stores the training language materials in a corresponding corpus. Because the training language materials are first-hand data generated by the service system itself, corresponding update may be performed based on a current problem of the service system compared with an update method of copying the training language materials from the outside, so that the update process is more targeted and blind update is avoided.

Manners in which the service system acquires the training language materials of different service components are exemplified below.

Case 1: the service component of the service system includes a business component, and the corpus includes a knowledge corpus. The service system extracts first request data and first matching data from a first data set of the business component, and the first matching data includes first question data and/or first answer data which match/matches the first request data in the business component. The training language materials are determined according to the first request data and the first matching data that are extracted, and the training language materials are stored in the knowledge corpus.

For example, the service system is a customer service system, and the first data set includes all question and answer pairs, i.e., all the first request data and all the first answer data, that are generated by the service system when the service system provides an online service. The first request data refers to a question raised by a user, the first question data in the first matching data refers to a prestored question with a highest similarity to data of the question raised by the user in the business component, and the first answer data refers to a prestored answer that matches the prestored question.

For example, the business component searches for the first question data based on the similarity between the first request data raised by the user and the first question data in the knowledge corpus when providing a service. Therefore, a first database may include all the first request data generated by the service system when the service system provides online service, and the first question data that matches the first request data in the knowledge corpus of the business component; or the first database may include the first request data, and the first question data and the first answer data that match the first request data in the business component; or the first database may include the first request data and the first answer data. When the first matching data is the first answer data, the service system may first search for the first question data corresponding to the first answer data according to the knowledge corpus, and then train the business component based on the first question data and the first request data.

It should be noted that those skilled in the art may understand that the first data set may be a set of the first request data to which the business component successfully responds and the first matching data that matches the first request data, or may be a set of the first request data to which the business component fails to respond and the first matching data that matches the first request data. The first matching data that matches the first request data includes prestored question data with a highest similarity to the first request data and/or answer data corresponding to the prestored question data in the knowledge corpus of the business component.

In an example, the first request data to which the business component successfully responds and the first matching data that matches the first request data may be all put into the first data set, or may be put into the first data set after it is determined that the similarity between the first request data and the first matching data that matches the first request data is within a preset similarity interval. The similarity interval may be set as required, and the similarity between the first request data and the first matching data may be a similarity between the first request data and the first question data in the knowledge corpus. If the first request data and the first question data are in a text form, a similarity between the first request data and the first question data may be determined with reference to a method of text similarity computing. If the first request data and the first question data are in an image form, the similarity between the first request data and the first question data may be determined with reference to a method of image similarity computing.

For example, the similarity interval may be set as 90%-100%, and the first request data with the similarity within the similarity interval is generally deemed to be correctly matched. This part of the first request data is extracted and audited, so that the first request data that is incorrectly matched may be found timely. The business component is updated based on the first request data and the first matching data, so that service performance of the business component can be improved.

It should be noted that only the first request data with the similarity within the similarity interval and the first matching data that matches the first request data are put into the first data set, so that the first request data that meets the requirement may be extracted in a more targeted manner, thereby obtaining the training language materials which better meet the requirement.

In an example, an electronic device determining the training language materials according to the first request data and the first matching data that are extracted includes: auditing the first request data and the first matching data that are extracted; jugding whether the audit is passed; a first label of the first request data that is extracted indicating that the first request data fails to be matched, if it is judged that the audit is not passed; and using the first request data that is extracted, the first matching data of the first request data that is extracted, and the first label of the first request data that is extracted as the training language materials.

Specifically, whether the first matching data is relevant to the first request data, i.e., whether an irrelevant answer is given, is audited. The audit is passed when the first matching data is relevant to the first request data. The audit is not passed when the first matching data is irrelevant to the first request data, and the first request data, the first matching data, and the first label indicating that the matching fails are used as the training language materials and stored in the knowledge corpus. During updating the business component, it is determined that the first request data is irrelevant to the first matching data based on the first label, then relevance between the first request data and the first matching data may be reduced, so that a probability of matching the first matching data is lower when the first request data is replied next time.

It should be noted that the first request data and the first matching data that are extracted are audited, so that accuracy of the training language materials can be ensured, thereby further ensuring service performance of an updated business component.

In an example, it is judged that the audit is passed if the first request data that is extracted is request data to which the business component successfully responds, and the first request data, the first matching data, and the first label indicating that the matching succeeds are not stored, so as to prevent edge solidification caused by repeated training performed by the business component on the successful response.

In an example, if the first request data that is extracted is request data to which the business component fails to respond, it is determined that the first label of the first request data that is extracted indicates that the first request data is successfully matched when it is judged that the audit is passed; and the first request data that is extracted, the first matching data of the first request data that is extracted, and the first label of the first request data that is extracted are used as the training language materials. Specifically, the first request data that fails to be responded is extracted from the business component, and the first matching data corresponding to the first request data includes the first question data and/or the first answer data to which the business component match/matches and having the highest confidence. It is indicated that the business component is correctly matched if the audit is passed. However, since a matching model in the business component considers that a probability of the correctness (confidence) thereof is excessively low, the business component does not feed back the first question data and/or the first answer data obtained through matching, that is, the response fails. In this case, the first label of the request is marked as a successful matching and is used as the training language material, so that the business component that is updated based on the training language material may successfully respond to the request data in a next service process, thereby improving performance of the business component, and further improving service performance of the service system.

It should be noted that those skilled in the art may understand that, in an actual application, the first request data may be extracted from a request data set that fails to be responded in a certain proportion, and the proportion value may be set as required. In this embodiment, an amount of the first request data extracted from the request data set that fails to be responded is not limited.

It should be noted that the business component is updated based on the request data to which the business component fails to respond, thereby improving service performance of the business component.

In a specific implementation, the electronic device may determine whether the first matching data that matches the business component is the answer corresponding to the first request data through artificial audit. If so, the audit is passed. If not, the audit is not passed. The first matching data that matches the business component is audited artificially, so that correctness of an audit result can be ensured.

In a specific implementation, an automatic audit may be triggered when the number of times for updating the business component of the service system reaches a preset number of times. During the automatic audit, the service system may audit the first request data and the first answer data through a pseudo label and the like. The preset number of times may be set according to experience of the developer as required.

In an example, the service component of the service system further includes an intent classification component, and the corpus further includes an intent classification corpus. A reason for the business component failing to be matched may be that the intent classification component mistakenly identifies non-business request data as business request data, or may be that a matching model of the business component itself is deficient. Therefore, the electronic device first judges whether the first request data that is extracted is correctly classified before determining that the first label of the first request data that is extracted indicates that the first request data fails to be matched. The step of auditing the first request data and the first matching data that are extracted are performed if it is judged that the first request data is correctly classified, that is, the first request data is exactly a business class request. And if it is judged that the first request data is incorrectly classified, that is, the first request data is a non-business class request but is mistakenly classified as the business class request, it is determined that a second label of the first request data that is extracted indicates that the first request data is a non-business class request, and the first request data that is extracted and the second label of the first request data that is extracted are stored in the intent classification corpus.

In an example, whether the first request data is correctly classified is judged artificially, and the electronic device determines a judging result based on the judging result which is artificially input.

It should be noted that the intent classification corpus or the knowledge corpus is filled according to the correctness of a classification result, so that a corresponding component may be updated in a targeted manner based on practical reasons of the failed matching, thereby improving service performance of the service system.

In an example, a working process of the intent classification component includes: performing intent classification on the request data that is received; calling the business component if the request data is identified as the business class request; or calling the non-business component if the request data is identified as the non-business class request. For example, the intent classification component may predict a user behavior through priori knowledge of offline markup text mining, so as to determine a category of the request data.

In an example, the intent classification component includes an intent classification model, and a process that the intent classification component performs the intent classification on the request data that is received includes: inputting the request data that is received into the intent classification model; where an unknown parameter in the intent classification model is obtained through training according to training data, and the training data includes training request data as an input and a second label of the training request data as an output; and determining that the request data that is received is the business class request or the non-business class request according to the output of the intent classification model.

It should be noted that, in this embodiment, the business component refers to a component configured to respond to the request data which is relevant to a business of the service system, and the non-business component refers to a component configured to respond to the request data which is irrelevant to a business of the service system.

In an example, after the electronic device stores the training language materials in the knowledge corpus, the first request data is re-extracted from the first request data that fails to be responded and the first request data that is re-extracted is stored in the knowledge corpus, if it is determined that the first request data that is successfully matched in the knowledge corpus is more than the first request data that fails to be matched; or the first request data is re-extracted from the first request data that is successfully responded and the first request data that is re-extracted is stored in the knowledge corpus, if it is determined that first request data that is successfully matched in the knowledge corpus is less than the first request data that fails to be matched.

It should be noted that, it is ensured that an amount of the first request data that is successfully matched is as similar as possible to an amount of the first request data that fails to be matched in the knowledge corpus, so as to avoid deviation of the matching model learning when the business component is iteratively updated. For example, because the first request data and the first matching data that are successfully matched in the knowledge corpus make few contributions to existing functions, the business component may repeatedly learn such data if it is too much in the knowledge corpus, which may cause the edge solidification. However, an alarm may be triggered if the first request data and the first matching data that fail to be matched in the knowledge corpus are too much.

In an example, a working process of the business component includes: acquiring business request data; preprocessing the business request data; and inputting the business request data that is preprocessed into a matching module to obtain business answer data; where the matching module is determined according to the training request data and training answer data. A specific algorithm of the business component may be determined according to a specific business of the service system, and the algorithm and a data structure may be customized according to the business requirement.

In an example, a process that the business component preprocesses the business request data includes: cleaning the business request data; and extracting a feature of the business request data that is cleaned to obtain a sentence vector or a word vector of the business request data.

For example, the business component includes a data cleaning module 21, a feature engineering module 22, a matching module 23, and a knowledge corpus 24. A schematic diagram of interaction between each module of the business component is shown in FIG. 2, which includes the following steps.

In step 201, first request data is acquired.

In step 202, data is cleaned.

Specifically, the data cleaning module 21 cleans the first request data that is input into the business component after the business component is called, for example, feature encoding of a text, numerical normalization, and the like.

In step 203, a feature is extracted.

Specifically, the feature engineering module 22 of the business component extracts the feature of the first request data that is cleaned to obtain the feature of the first request data. For example, the feature engineering module 22 performs a sentence vectorization processing on the first request data to obtain the sentence vector of the first request data, and the like.

In an example, the feature engineering module 22 of the service system supports a large-scale distributed cluster computing and balances a single machine load using a mechanism such as prefetch, and the like.

It should be noted that those skilled in the art may understand, in actual application, a specific processing algorithm of the feature engineering component of the business component may be defined according to a business type of the service system, which is not limited in this embodiment.

Alternatively, the processed data is cleaned again so as to achieve effects of removing a stop word and filtering after the feature engineering.

In step 204, first answer data is matched and output.

Specifically, the matching module 23 may directly match the first request data with the knowledge corpus to obtain the first answer data. Or the matching module 23 may first compare the first request data with request data that is successfully responded within a time period, to determine a similarity between the first request data and the request data that is successfully responded within the time period. Herein, a time difference between the time within the time period and a current time is less than a second preset time. And if the first request data which has the similarity greater than a first threshold and is successfully responded exists, answer data corresponding to the request data which has the highest similarity and is successfully responded may be directly used as the first answer data. Or if the first request data which has the similarity greater than the first threshold and is successfully responded does not exist, the first request data may be responded through the knowledge corpus.

It should be noted that those skilled in the art may understand that the second preset time may be set as required, for example, the second preset time may be set to seven days, ten days, or the like, which is not limited in this embodiment.

It should be noted that those skilled in the art may understand that the first threshold may be any percentage that is not greater than 100%, and a specific value thereof may be set according to a requirement of response accuracy. For example, the specific value may be set between 50% and 100%, such as 80%, which is not limited in this embodiment.

It should be noted that a method for calculating the similarity between the first request data and the request data that is successfully responded may be set as required, the similarity between the first request data and the request data that is successfully responded may be usually considered from a syntax level and a semantic level, and a specific algorithm is not limited herein.

A process that the matching model 23 acquires the first answer data through matching in the knowledge corpus is illustrated as follows.

Matching models in the matching module 23 may include one or more matching sub-models, and each matching sub-model matches the first request data with the first question data in the knowledge corpus of the business component based on a feature of the first request data, to determine the first question data with the highest similarity to the first request data and to determine the first answer data according to a matching result of each matching sub-model. The matching sub-model may be a Bayesian prior model, a probability map model, a neural network model, or the like.

It should be noted that those skilled in the art may understand, in an actual application, the business component may directly feed back the first answer data to an online environment, or may set a strict confidence interval and feed back the first answer data to the online environment when the similarity between the first answer data and the first request data is within the confidence interval, and a specific implementation is not limited in this embodiment.

In an example, the matching model includes T matching sub-models, and T is a positive integer greater than 1. A processing logic of the matching model may be: using an input of the matching model as an input of a 1^{th} matching sub-model, using an output of an *i*^{th} matching sub-model as an input of an (*i*+1)^{th} matching sub-model, and using an output of a *T*^{th} matching sub-model as an output of the matching model, where 1 ≤*i* < T. The processing logic of the matching model may also be: inputting the input of the matching model into the T matching sub-models respectively, and determining the output of the matching model according to the output of the T matching sub-models.

For example, a first matching sub-model of the matching model is a character matching sub-model, and a second matching sub-model is a word matching sub-model. During the matching, the first request data is input into the character matching sub-model. The character matching sub-model performs the matching based on the first question data in the knowledge corpus and each character of the first request data, sorts the first question data according to a similarity to the first request data, and selects top P pieces of first question data as candidate question data, or selects the first question data with the similarity which is greater than a first preset value to the first request data as the candidate question data. The character matching sub-model outputs the candidate question data, and the candidate question data is input into the word matching sub-model. The word matching sub-model performs the matching based on the candidate question data and words obtained through segmentation of the first request data, and the candidate question data with the highest similarity to the first request data is used as the first question data that matches the first request data.

For another example, a first matching sub-model of the matching model is the character matching sub-model, and a second matching sub-model is the word matching sub-model. During the matching, the first request data is input into the character matching sub-model and the word matching sub-model respectively. The character matching sub-model performs the matching based on the first question data in the knowledge corpus and each character of the first request data, sorts the first question data according to the similarity to the first request data, and selects top P pieces of first question data as the candidate question data, or selects the first question data with the similarity which is greater than a first preset value to the first request data as the candidate question data. The word matching sub-model performs the matching based on the first question data in the knowledge corpus and the words obtained through segmentation of the first request data, sorts the first question data according to the similarity to the first request data, and selects top Q pieces of first question data as the candidate question data, or selects the first question data with the similarity which is greater than a second preset value to the first request data as the candidate question data. The matching model selects one piece of the candidate question data from the candidate question data output by the character matching sub-model and the candidate question data output by the word matching sub-model as the first question data that matches the first request data. For example, the candidate question data with the highest similarity to the first request data in all the candidate question data is used as the first question data that matches the first request data. Here, P and Q are positive integers.

It should be noted that those skilled in the art may understand that P, Q, the first preset value, and the second preset value may be set as required, which is not limited herein.

It should be noted that those skilled in the art may understand that a developer may set a matching model, as required, to select a selection logic of the first question data that matches the first request data from output of T matching sub-models, and the selection logic is not limited in this embodiment.

It should be noted that the matching model summarizes and analyzes results obtained through different algorithms in a multi-level cascaded or single-layer merged manner, so that a finally obtained matching result is more accurate.

In an example, in the T matching sub-models of the matching model, matching algorithms of M matching sub-models are fuzzy matching algorithms, and matching algorithms of N matching sub-models are precise matching algorithms, where M and N are positive integers, and M + N = T. The fuzzy matching algorithm is mainly a word sequence independent algorithm, which may be a sequence distance algorithm for statistics of natural languages (such as Levinstein, cosine similarity, Euclidean distance, and the like), a dynamic programming algorithm (such as a longest common subsequence (LCS) algorithm), a Smith waterman algorithm, and the like. The precise matching algorithm is mainly a word sequence dependent algorithm, such as convolutional neural networks (CNN) of deep learning, a long short-term memory (LSTM) network, an attention mechanism algorithm, and an n-gram language model for statistics of natural languages.

It should be noted that the business component uses both the fuzzy matching algorithm and the precise matching algorithm during the matching, thereby improving matching accuracy of the business component.

Specifically, the business component responds to a request of a business category through performing the steps described above.

Case 2: the service component of the service system includes a non-business component, and the corpus includes a non- business template corpus. An electronic device acquires second request data to which the non-business component fails to respond, audits the second request data and second answer data corresponding to the second request data, and stores the second request data and the second answer data in the non- business template corpus if the audit of the second request data and the second answer data is passed.

In an example, a working process of the non-business component includes: acquiring non-business request data; preprocessing the non-business request data; matching the non-business request data that is preprocessed with a template in the non-business template corpus; and responding to the non-business request data according to a matching result.

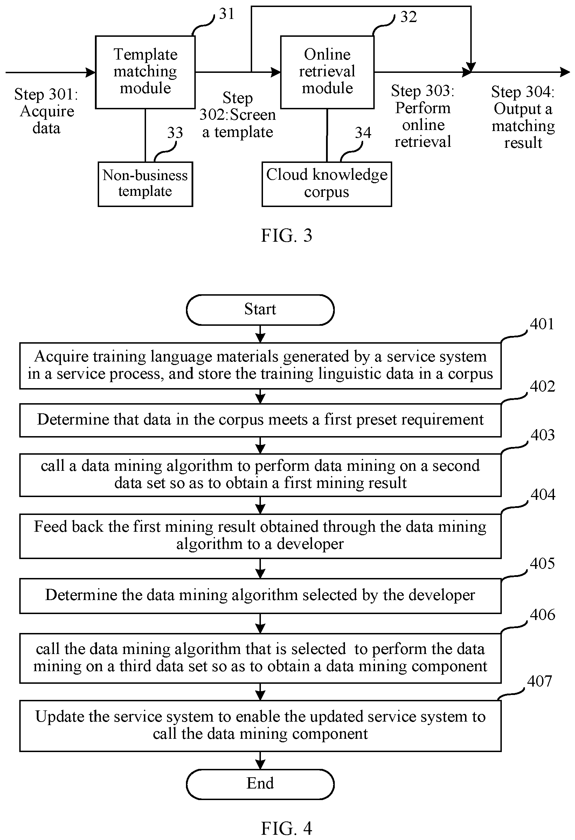

For example, the non-business component includes a template matching module 31, an online retrieval module 32, and a non-business template corpus 33. A schematic diagram of interaction between modules within the non-business component is shown in FIG. 3, and an interaction process includes the following steps.

In step 301, the non-business request data is acquired.

Specifically, the electronic device inputs the non-business request data into the non-business component. And the non-business component performs preprocessing operations such as data cleaning and the like on the non-business request data, and inputs the non-business request data that is processed into the template matching module 31.

In step 302, the template is screened.

Specifically, the template matching module 31 matches a template of the non-business request data that is processed with a template in the non-business template corpus through a method such as a regular expression, an artificial rule, or the like. Reply generation or retrieval is performed on the text in the matching through a specific template pattern. The non-business component calculates a coefficient of the overall similarity between samples and corresponding templates in the matching. If the similarity coefficient meets the requirement, an output of the template matching module 31 is used as the matching result and step 304 is performed, otherwise step 303 is performed.

In step 303, online retrieval is performed.

Specifically, when the similarity coefficient of the template matching module 31 fails to meet the requirement, the non-business component activates an online knowledge question and answer component and retrieves a cloud knowledge corpus 34. Accuracy of a template matched by the template matching module 31 depends to a great extent on reasons such as relevance between an implicit meaning and depth (relevance of context) of the non-service request data, and the like. If the coefficient of the overall similarity between the sample of the template matching module 31 in the matching and the corresponding template fails to meet the requirement, it also indicates that the non-business request data has a more profound grammatical structure and knowledge background (that is similar to an encyclopedia question and answer reply). Thus, the answer needs to be searched for from a network environment through a search engine, and the answer found in the network environment is used as the matching result.

In step 304, the matching result is output.

Specifically, the service component of the service system further includes an intent classification component, and the corpus further includes an intent classification corpus. A reason for the non-business component failing to respond may be that the intent classification component identifies the business request data as the non-business request data and mistakenly calls the non-business component, or may be that a matching model of the business component itself is not accurate enough or the non-business templates are too few. Therefore, the electronic device judges whether intent classification of the second request data is incorrect when an audit of the second request data and the second answer data is not passed; if so, it is determined that a second label of the second request data indicates that the second request data is a business class request, and the second request data and the second label of the second request data are stored in the intent classification corpus; if not, the second answer data that is artificially input may be acquired or the second answer data may be searched for from the cloud knowledge corpus based on the second request data, and the second request data and the second answer data are stored in the non-business template corpus.

It should be noted that the second request data to which the non-business component fails to respond due to the incorrect intent classification is filled into the intent classification corpus, thereby enriching content of the intent classification corpus, so that an updated intent classification component becomes more accurate.

It should be noted that all the training language materials in the intent classification corpus, the knowledge corpus, and the non-business template corpus come from data generated by the service system when providing an online service, so that the update of the service system is able to overcome existing problems of the service system, and the update of the service system becomes more targeted and better conform to the requirement.

In step 102, the service system is updated after it is determined that data in the corpus meets a first preset requirement.

Specifically, the first preset requirement is that the data in the corpus is greater than a first threshold, or the data in the corpus grows faster than a second threshold.

It should be noted that those skilled in the art may understand that the first threshold and the second threshold may be set to any value as required, which is not limited in this embodiment.

It should be noted that those skilled in the art may understand that, in an actual application, an update task may be triggered in other manners. For example, if a time interval from last update of the service system is greater than a third preset value, the update task of the service system may also be triggered to update the service system, so as to avoid degradation of service performance of the service system caused by not updating for a long time. Herein, the third preset value may be set as required.

In an example, the service system includes a business component, and a process of updating the service system includes: determining a question to be extended according to the first request data of which the first label indicates that the matching fails in the knowledge corpus; acquiring answer data corresponding to the question to be extended; and updating the knowledge corpus of the business component according to the question to be extended and the answer data corresponding to the question to be extended.

In an example, if an update frequency of the service system is greater than a fourth preset value, an alarm may be triggered, and a real person is notified to intervene in the service. The fourth preset value may be set as required.

It should be noted that, in this embodiment, a traditional timing and quantitative update strategy is replaced with a dynamic regulation update period, and the service system automatically judges an update period of the service system using the training data acquired from the corpus as a standard and notifies a person to intervene in when necessary.

In an example, the service system may automatically record and feed back information such as online service efficiency and a real-time hot spot during iteration (update) for construction of the knowledge corpus and mining of service expansion.

It should be noted that, in this embodiment, because each service component of the service system performs updating based on online data, each update process is more targeted, thereby greatly prolonging life of the service components and keeping pace with the times. In the meantime, because most update operations are automatically completed by the service system, so that human costs, maintenance costs, and development costs are reduced to the utmost extent.

In an example, the electronic device trains the service component of the service system based on the training language materials in the corpus. For example, the electronic device trains the business component based on the knowledge corpus, and iterates an original business component with the business component obtained through training. The electronic device trains the non-business component based on the non-business template corpus, and iterates an original non-business component with the non-business component obtained through training. The electronic device trains the intent classification component based on the intent classification corpus, and iterates an original intent classification component with the intent classification component obtained through training.

In an example, each component of the service system is accessed in a form of an interface, and interfaces of all the components are customized, so that the components in the service system are able to be added or removed more conveniently.

It should be noted that the foregoing descriptions are only examples, and does not constitute a limitation to the technical solutions of the present disclosure.

Compared with the existing technologies, according to the method for updating the service system provided in this embodiment, the service system automatically triggers the update task when the data in the corpus meets the first preset requirement, so that the service system may determine its update period according to its condition, to make an update of the service system better conform to an update requirement, thereby preventing a developer from frequently updating the service system or forgetting to update the service system. In addition, the training language materials in the corpus come from the online environment of the service system, so that the update process is more targeted.

Some embodiments of the present disclosure relate to another method for updating the service system. And this embodiment is substantially the same as the embodiments described above, and a main difference is that: in the embodiments described above, updating the service components (the intent classification component, the business component, and the non-business component) in the service system is used as an example to illustrate the method for updating the service system. However, in this embodiment of the present disclosure, updating an architecture of the service system is used as an example to illustrate the method for updating the service system.

Specifically, as shown in FIG. 4, the method for updating the service system includes the following steps.

In step 401, training language materials generated by the service system in a service process are acquired, and the training language materials are stored in a corpus.

Specifically, the training language materials include third request data received by the service system, and the corpus is a request data set. The service system stores the third request data input by a user in the request data set when providing an online service. Herein, the request data set may be a demand pool.

In step 402, it is determined that data in the corpus meets a first preset requirement.

Specifically, if the third request data in the request data set is greater than a first threshold, or the third request data in the request data set grows faster than a second threshold, it indicates that the current service system serves a larger number of times, an amount of the request data that is able to be mined meets a preset requirement, and the service system automatically triggers subsequent steps.

In step 403, a data mining algorithm is called to perform data mining on a second data set so as to obtain a first mining result.

Specifically, the second data set is a sampling data set of the third data set, and the third data set includes all the third request data generated by the service system in the service process. An electronic device calls all the data mining algorithms that are prestored to mine the second data set so as to obtain the first mining result. The data mining algorithm may include any one or any combination of a user portrait mining algorithm, a service quality mining algorithm, a user behavior prediction algorithm, a real-time hot spot tracking algorithm, a sentence pattern template collection algorithm, a knowledge corpus expansion algorithm, and a human intervention alarm algorithm.

In an example, the electronic device acquires first-hand request data and answer data in an online environment of the service system through a log file recorded by a background service, and cleans the first-hand request data and answer data. For example, a uniform resource locator (URL), a picture, a link, an IP, and some redundant information are removed through regularization; private information such as a password and an account number is filtered through desensitization; Punctuation is normalized in English; and Words such as a synonym and a word generated due to a typing error are replaced using an existing dictionary (A specific process is determined depending on an algorithm design scenario). The electronic device stores the third request data that is processed in the third data set. And a part of data is extracted from the third data set as a second data set for mining through the data mining algorithm and user behavior analysis.

In an example, in each update process, the third request data generated by the service system is copied and covered for the next use.

In an example, the electronic device determines text data generated by the service system in the service process according to the log file of the service system, cleans the text data, and determines the third data set according to the text data that is cleaned.

In an example, a process of acquiring the second request data set includes: after determining the third data set according to the text data that is cleaned and before calling the data mining algorithm to perform the data mining on the second data set so as to obtain the first mining result, extracting the third request data from the third data set according to a preset extraction rule; and determining the second request data set according to the third request data that is extracted.

In step 404, the first mining result obtained through the data mining algorithm is fed back to a developer.

Specifically, the electronic device feeds back the first mining result, and after viewing the first mining result, the developer determines whether mining results obtained through each data mining algorithm help to improve service performance of the service system according to the first mining result and a business demand of the service system, and selects a required data mining component algorithm from the data mining algorithms according to a determining result.

In step 405, the data mining algorithm selected by the developer is determined.

Specifically, the data mining algorithm selected by the developer is determined according to an instruction input by the developer, and the data mining algorithm is called to generate a corresponding data mining component.

In step 406, the data mining algorithm that is selected is called to perform the data mining on the third data set so as to obtain the data mining component.

Specifically, the data mining algorithm is called to perform the data mining on the third data set, and the data is packaged into a component. The service system calls a corresponding data mining component through calling an interface of the data mining component.

In an example, the data mining component may include: any one or any combination of a user portrait mining component, a service quality mining component, a user behavior prediction component, a real-time hot spot tracking component, a sentence pattern template collection component, an expansion component, and a human intervention alarm component.

Functions (working processes) of each data mining component are illustrated as follows.
1. The user portrait mining component: mining input data of the user portrait mining component through a knowledge graph algorithm or a keyword extraction algorithm to obtain a third mining result; and determining user portraits of each user according to the third mining result. Specifically, the user portrait mining component mines a character, a speech style, a possible business post, a commonly contacted component, and the like of the user through the third request data historically sent by the user, to obtain the user portrait mining component. The user portrait mining component may determine a user portrait, a group sub-system to which the user belongs, and the like according to the third request data currently sent by the user.
   For example, the developer enables the business component to call the user portrait mining component to input the user portrait obtained through mining by the user portrait mining component into a matching sub-model. The matching sub-module is configured to be able to match question data in the knowledge corpus and the third request data in combination with the user portrait.
   In an example, the developer may divide users according to a result obtained through mining by the user portrait mining algorithm. Users with same or similar user portraits are divided to one group, so that the developer expands and customizes user group sub-systems for users in different groups.
2. The service quality mining component: analyzing the input data of the service quality mining component through a word vector characterizing transfer learning algorithm or a classifier based on a self-attention mechanism to determine an emotion score of the input data of the service quality mining component; and determining a quality score of the service system according to the emotion score.
   It should be noted that those skilled in the art may understand that, in an actual application, the service quality mining component may further determine service quality through mining other parameters. For example, smoothness degree of the service is determined through statistics of user's question times within a unit time and the similarity degree of the questions. The service quality mining component is constructed based on an assumption of a user behavior. A user may not repeatedly ask a same question within a short time in a common scenario, unless the answer does not meet a demand of the user, that is, the service fails. Therefore, service quality of the service system may be determined according to a question frequency of the user. For example, a threshold is set, and the service is deemed to fail if the number of times the user repeatedly questioning is greater than a fourth threshold. Alternatively, the third request data of which the user service fails may be stored in an expansion corpus and then be artificially audited. A reason for the service failure is determined, and the corresponding service component (such as the business component or the non-business component) is updated, so that the service system may respond to the third request data of which the service fails subsequently.
3. The user behavior prediction component: analyzing the input data of the user behavior prediction component through a time sequence prediction algorithm to obtain behavior pattern information of each user; and predicting behavior information of each user based on the behavior pattern information of each user. Specifically, the behavior pattern information indicates an association relation between user behaviors. Based on this association relation, the user behavior prediction component predicts a subsequent operation of the user according to the third request data input by the user when the user consults next time, so as to provide a related service. For example, if the user has sent the request data about a question related to a movie ticket10 times and the user sends the request data about popcorn after sending the question related to the movie ticket 9 times, the association relation between sending the request data about the question related to the movie ticket by the user and sending the request data about the popcorn by the user may be determined. Therefore, it may be predicted that next piece of the request data of the user is related to the popcorn if the user currently sends the request data about the question related to the movie ticket.
4. The real-time hot spot tracking component: extracting a keyword in the input data of the real-time hot spot tracking component through the keyword extracting algorithm; and determining a hotspot question in the input data of the real-time hot spot tracking component according to the keyword that is extracted. It is determined whether the third request data is a high frequency question or a leisure question through calculating a proportion of the third request data in a third request data set. And the hotspot question of the service in a service scenario corresponding to the service system of a current version is determined according to the high frequency question. Specifically, the real-time hot spot tracking component may deem same or similar third request data asked by different user groups within a short time as the high frequency question. The real-time hot spot tracking component may serve the expansion component, that is, a customer service personnel is notified to optimize data in the knowledge corpus of the business component or to supplement automatic reply data (i.e., third answer data) related to the hotspot question after the hotspot question has been mined, so as to meet an online demand to the utmost extent.
5. The sentence pattern template collection component: matching the input data of the sentence pattern template collection component with a target sentence pattern to obtain matching data that matches the target sentence pattern; and determining an extended sentence pattern template according to the matching data. Specifically, a new sentence pattern template is discovered through mining an asking manner of the third request data of the user and a corresponding language template (or referred to as a grammatical structure combination), and the new sentence pattern template is added to the non-business template corpus. Different from the service scenario, the system usually may not ensure that the asking by the user certainly implies a strong service request in the service process. For such services as a fuzzy questioning scenario, gossip, and the like (that is, data sent by the user is the non-business request data), the system usually answers through retrieving or querying the non-business template corpus. Therefore, mining the asking manner of the user and the corresponding language template (or referred to as the grammatical structure combination) helps to customize a more personalized AI application.
   For example, a target sentence pattern is "Dear customer service personnel [hello]*, my question is: \S+", where the [hello] * indicates that the hello in the square bracket is not essential, \S represents a valid character, and + represents that there is at least one character. A template category corresponding to a preset field of the target sentence pattern includes: the field "hello" as a greeting category template. The greeting category template in the non-business template corpus includes: hello. Based on the target sentence pattern, the sentence pattern template collection component recalls the request data (the second request data or the third request data) which is in the input data of the sentence pattern template collection component and has a matching degree greater than a fifth threshold with the target sentence pattern, and uses the request data that is recalled as the matching data. The sentence pattern template collection component finds a new sentence pattern template from the asking manner of the matching data and the corresponding language template (or referred to as the grammatical structure combination), and adds the new sentence pattern template to the non-business template corpus. For example, the matching data is "Dear customer service personnel, good morning, my question is: how is the weather today?", and the greeting category template may be expanded according to the matching data and the template category corresponding to the preset field of the target sentence pattern. That is, "good morning" is used as an expanded sentence pattern template, and the corresponding template category is the greeting category template. The expanded sentence pattern template is archived into the non-business template corpus. If the user sends "good morning", a sentence pattern template which the non-business component matches may be "hello" when the non-business template corpus is not expanded. And after the template is expanded, a sentence pattern template which the non-business component matches is "good morning" when the user sends "good morning". It may be known from the content described above that the non-business component can respond more accurately through expanding the sentence pattern template in the non-business template corpus.
6. The expansion component: acquiring data of any one or any combination of the behavior information of each user predicted by the user behavior prediction component, the hotspot question determined by the real-time hot spot tracking component, and the sentence pattern template collected by the sentence pattern template collection component; determining expansion data and the corpus corresponding to the expansion data according to the data that is acquired; and archiving the expansion data into the corpus corresponding to the expansion data. The service system is intended to resolve online problems and serve the customer. An adequate and complete knowledge system being established is taken as the primary guarantee for automated service. Therefore, the expansion component may be provided in the service system. The expansion component may find answers to questions such as behavior information of each user predicted by the user behavior prediction component, hotspot questions tracked by the real-time hot spot tracking component, and questions, mined by the service quality mining component, of which the service fails. The questions and the answers to the questions are used as the expansion data to be archived into a corresponding corpus, so as to expand the corpus. For example, if the expansion component performs expansion based on a hotspot question, the expansion component finds an answer to the hotspot question, and archives the hotspot question and the answer to the hotspot question into the knowledge corpus.
   It should be noted that, in an actual application, the answers to each foregoing question may be provided by the developer based on the information described above, or the answers to each foregoing question may also be obtained through crawling related information on the Internet. In order to ensure service quality, alternatively, the knowledge corpus may be expanded by the developer.
7. The human intervention alarm component: monitoring a preset monitoring parameter, and performing a preset operation corresponding to the monitoring parameter when the monitoring parameter meets a second preset requirement corresponding to the monitoring parameter; where the monitoring parameter includes the quality score of the service system; and a preset operation corresponding to the quality score of the service system is that switching the service system to a human service. For example, a human intervention alarm is triggered to immediately switch the service system to the human customer service, if a mining result of the service quality mining component indicates that the quality score of the service system is lower than a sixth threshold. A risk control process of the service system needs to rely on large-scale service quality detection, and the system itself has a complete risk control alarm mechanism to assist network security measures such as emergency disposal of emergencies, traffic monitoring, and the like.

It should be noted that those skilled in the art may understand that other parameters may further be monitored in an actual application. For example, traffic of the service system may be monitored, and a traffic limiting measure is taken when the traffic exceeds a preset seventh threshold. A type and the number of parameters monitored by the human intervention alarm component are not limited in this embodiment.

In step 407, the service system is updated, so that the service system that is updated calls the data mining component.

Specifically, an architecture of the service system is adjusted according to a function of the data mining component and a relation between the data mining component and an existing component in the service system, so that the service system that is adjusted calls the data mining component.

For example, the data mining algorithm selected by the developer is the user behavior prediction algorithm, and the data mining component is the user behavior prediction component, where the data mining component is obtained through packaging after the third data set is mined using the user behavior prediction algorithm. The user behavior prediction component is used after the business component or the non-business component responds to the third request data, and a next behavior of the user is predicted based on the user behavior prediction component. In other words, the service system that is updated calls the user behavior prediction component after calling the business component or the non-business component, and the user behavior prediction component predicts the next behavior of the user according to the third request data of the user. For example, the following result is obtained through mining using the user behavior prediction algorithm: the user probably consults information about the popcorn next time if the user consults information about the movie ticket the first time. And if the user behavior prediction component determines that the third request data indicates the information about consulting the movie ticket, answer data related to the popcorn is automatically added on the basis of answer data of the business component or the non-business component, and the data to which the answer data related to the popcorn is added is used as final answer data.

It may be known from the above content that, compared with a traditional service system, in the method for updating the service system provided in this embodiment, resources at hand may be better utilized and mining potential values of the service and the data mining algorithm may be devoted more effort to during updating the service system, so as to generate some resources for expanding new components, thereby facilitating continuous update and improvement of the service system by the developer.

A customer service system is used as an example as follows to illustrate the method for updating the service system.

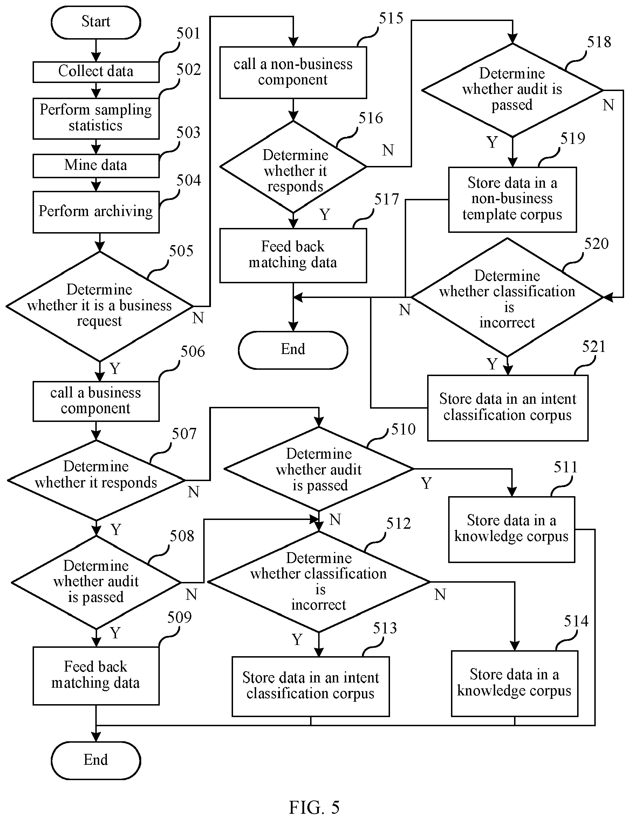

Specifically, a schematic diagram of an operation process of the system is shown in FIG. 5, which includes the following steps.

In step 501, data is collected.

Specifically, request data and answer data of an online environment are collected to obtain a third data set (a full data set) during the operation of the service system. For a process of the data collection, reference may be made to related descriptions of the embodiments described above, and details are not described herein again.

In step 502, sampling statistics is performed.

Specifically, a part of data samples are sampled from the full data set to obtain a second data set.

In step 503, the data is mined.

Specifically, the service system performs data mining on the second data set and feeds back a mining result. The third data set is mined according to the data mining algorithm selected by the developer to obtain the data mining component.

It should be noted that, in FIG. 5, a user portrait mining algorithm, a service quality mining algorithm, a user behavior prediction algorithm, a real-time hot spot tracking algorithm, a sentence pattern template collection algorithm, a knowledge corpus expansion algorithm, and a human intervention alarm algorithm are called to mine the second data set, so as to obtain, for example, data mining components which include a user portrait mining component, a service quality mining component, a user behavior prediction component, a real-time hot spot tracking component, a sentence pattern template collection component, an expansion component, and a human intervention alarm component. The data mining is illustrated with the above example described in FIG. 5. In an actual application, the second data set may be mined using other data mining algorithms, and a mining component is added or deleted selectively according to a mining result.

In step 504, archiving is performed.

Specifically, the third data set and the mining result of the third data set are archived and stored in a local database or backed up in the cloud (which is regularly updated). An archiving path may be set by the developer according to a type of the data mining component and a relation between the data mining component and other service components. For the mining result obtained through mining the third data set and the use of the mining result, reference may be made to related descriptions of step 406 and step 407, and details are not described herein again.

In an example, the expansion component expands each corpus based on hotspot questions mined by the real-time hot spot tracking component and sentence pattern templates mined by the sentence pattern template collection component. The expansion component archives the hotspot questions and answers to the hotspot questions into a knowledge corpus, and archives the sentence pattern templates mined by the sentence pattern template collection component and answers thereto into a non-business template corpus.

It should be noted that, for clarity, step 502 to step 504 are performed before step 505 in this embodiment. In an actual application, step 502 to step 504 may be performed simultaneously with step 505 to step 514, or step 505 to step 514 may be performed before step 502 to step 504.

It should be noted that locations in which other data mining components are archived are not shown in FIG. 5, which does not indicate that mining results of other data mining components are not archived.

In step 505, intent classification is performed, and it is determined whether it is a business request.

Specifically, a customer service system enables an AI service mode and awakens related service components (an intent classification component, a business component, and a non-business component). When a function of service components of the service system is awakened, the intent classification component is first enabled to distinguish questions and messages of users through classification, thereby performing different service processes in a targeted manner. Step 506 is performed if the questions and the messages of the users are determined as business class requests, or step 515 is performed if the questions and the messages of the users are determined as non-business class requests.

In an example, the customer service system may perform the service in a distributed manner through a stack, that is, the business component or the non-business component is called according to a classification result of the intent classification component after the intent classification component is called. A service component set in a next link of the business component or the non-business component is called after the business component or the non-business component completes the response, and so on.

In step 506, the business component is called.

Specifically, for a process that the business component provides service, reference may be made to related descriptions of functions of the business component in the embodiments described above, and details are not described herein again.

In step 507, it is determined whether the business component responds.

Specifically, step 508 is performed if the business component responds, or step 510 is performed if the business component does not respond.

In step 508, third matching data is audited, and it is determined whether the audit is passed.

Specifically, step 509 is performed if the audit is passed, or else, step 512 is performed.

It should be noted that an audit manner may be artificial audit or automated audit. Because all results obtained through an automation algorithm usually do not have very high confidence (i.e., reliability) in an initial stage of iteration, the artificial audit may be used in an earlier stage of use of the service system, so that performance of the service system is evaluated, deficiencies in the algorithm are fed back timely, and optimization is performed in a targeted manner. Alternatively, evaluation of the service quality is also followed up while serving. Each service of the service systems is monitored and adjusted through the artificial audit or the automated audit such as pseudo labelling, and the like. And the service system is switched to an human intervention service mode (i.e., a real-person customer service is enabled) from an AI service mode when the service system fails to reach a certain level of confidence.

In step 509, the third matching data is fed back to the user. Then the process ends.

In step 510, the third match data that most probably matches the business component is audited, and it is determined whether the audit is passed. Step 511 is performed if the audit is passed, or step 512 is performed if the audit is not passed.

In step 511, the third request data, the third matching data, and a first label of the third request data are stored in the knowledge corpus. The first label indicates that the matching succeeds. Then the process ends.

In step 512, it is determined whether the intent classification is incorrect.

If so, step 513 is performed, or else, step 514 is performed.

In step 513, the third request data, the third answer data, and a second label of the third request data are archived into the knowledge corpus. The second label indicates that the third request data is a non-business class request. Then the process ends.

In step 514, the third request data, the third answer data, and the first label of the third request data are archived into the knowledge corpus. The first label indicates that the matching fails. Then the process ends.

In step 515, the non-business component is called.

Specifically, for a process that the non-business component provides service, reference may be made to related descriptions of the function of the non-business component in the embodiments described above, and details are not described herein again.

In step 516, it is determined whether the non-business component responds.

Specifically, if so, step 517 is performed, or else, step 518 is performed.

In step 517, the third answer data is fed back to the user. Then the process ends.

In step 518, a template that most probably matches the non-business component is audited, and it is determined whether the audit is passed. Step 519 is performed if the audit is passed, or step 520 is performed if the audit is not passed.

In step 519, the third request data and the third answer data are stored in a non-business template corpus. Then the process ends.

In step 520, it is determined whether the intent classification is incorrect.

If so, step 521 is performed, or else, the process ends.

In step 521, the third request data and the second label of the third data are stored in the intent classification corpus. The second label indicates that the third request data is a business class request.

While archiving and backup, the service system may dynamically plans an update period according to a grow rate or an amount of data in the intent classification corpus, the knowledge corpus, and the non-business template corpus. When services in an earlier stage are immature and related algorithms of each component of the service system have unstable performance, the update period is short and the iteration is frequent; when services in a later stage is stable and the related algorithms of each component of the service system have stable performance, the update period is long and iteration is infrequent.

To sum up, the service system mentioned in this embodiment may update online service through establishing an automated iteration system. Core content is automatically abstracted and managed (or filtered through human intervention to improve the effect) while collecting online first-hand data. Collected information is periodically used for iteratively updating the service, and a new online service system continues the operation in place of the previous version. The iteration is thus repeated to make the service adapt to a changing environment online to the utmost extent, and an automated or a semi-automated system process also reduces maintenance and development costs. Compared with a traditional service system, it is more dedicated to automatically mine potential values of the services and the algorithms in addition to improving the service quantity, so that the automated process is used to help to mine the potential of the system and optimize solutions while maximizing the use of resources.

It should be noted that the foregoing is only used as examples and does not constitute a limitation to technical solutions of the present disclosure.

Compared with the existing technologies, mining is performed comprehensively in the method for updating the service system provided in this embodiment relative to a method that the developer first determines a required data mining component and then performs the data mining. And the developer may select an appropriate data mining algorithm for a mining result of the online first-hand data of the service system based on the data mining algorithms, so as to update the data mining component of the service system, so that more potential values of the third data set can be automatically mined.

The steps described above are divided only for clear description. During implementation, the steps may be merged into one step, or some steps may be split into a plurality of steps. Those including same logical relationships shall fall within the protection scope of the present disclosure. Inessential modification added or inessential design introduced to the algorithm or process, which does not change the core design of the algorithm and process thereof, shall fall within the protection scope of the present disclosure.

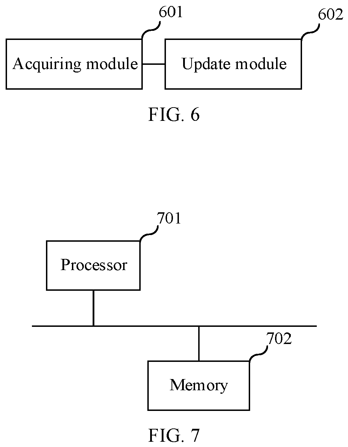

Some embodiments of the present disclosure relate to an update apparatus of a service system, as shown in FIG. 6, including: an acquiring module 601 and an update module 602. The acquiring module 601 is configured to acquire training language materials generated by the service system in a service process, and store the training language materials in a corpus. The update module 602 is configured to update the service system after it is determined that data in the corpus meets a first preset requirement; where the first preset requirement is that the data in the corpus is greater than a first threshold, or the data in the corpus grows faster than a second threshold.

It is not difficult to find that this embodiment is a system embodiment corresponding to the embodiments described above, and this embodiment may be implemented in combination with the embodiments described above. Related technical details mentioned in the embodiments described above are still valid in this embodiment, and are not described herein again in order to reduce repetition. Correspondingly, related technical details mentioned in this embodiment may also be applied to the embodiments described above.

It should be noted that the modules in this embodiment are all logical modules. In an actual application, a logical unit may be a physical unit, or may be a part of a physical unit, or may further be implemented as a combination of a plurality of physical units. In addition, in order to highlight an inventive part of the present disclosure, units that are not closely related to resolving the technical problems proposed in the present disclosure are not introduced in this embodiment, which does not indicate that there are no other units in this embodiment.

Some embodiments of the present disclosure relate to an electronic device, as shown in FIG. 7, including: at least one processor 701; and a memory 702 in communicative connection with the at least one processor 701; where the memory 702 stores instructions executable by the at least one processor 701, and the at least one processor 701 executes the instructions to cause the at least one processor 701 to perform the method for updating the service system mentioned in the above embodiments.

The electronic device includes one or more processors 701 and the memory 702. One processor 701 is used as an example in FIG. 7. The processor 701 and the memory 702 may be connected via a bus or other means, and an example of connecting via a bus is shown in FIG. 7. The memory 702, as a non-volatile computer readable storage medium, may be configured to store a non-volatile software program, a non-volatile computer-executable program, and a module. The processor 701 performs various function applications and data processing of the device by running the non-volatile software program, the instructions, and the module that are stored in the memory 702, that is, the method for updating the above service system is implemented.

The memory 702 may include a program storage area and a data storage area. The program storage area may store an operating system and an application program required by at least one function, and the data storage area may store an option list and the like. In addition, the memory 702 may include a high-speed random access memory, and may further include a non-volatile memory such as at least one magnetic disk storage device, a flash device, or other non-volatile solid state storage devices. In some embodiments, the memory 702 may optionally include memories remotely disposed relative to the processor 701, and these remote memories may be connected to an external device via a network. Examples of the above network include, but are not limited to, an Internet, an intranet, a local area network, a mobile communication network, and a combination thereof.

One or more modules are stored in the memory 702. The method for updating the service system in any of the above method embodiments is performed when the one or more modules are executed by the one or more processors 701.

The above products may perform the method provided in some embodiments of the present disclosure and have corresponding function modules for performing the method and beneficial effects thereof. For technical details that are not described in detail in this embodiment, reference may be made to the method provided in the some embodiments of the present disclosure.

Some embodiments of the present disclosure relate to a compute readable storage medium storing a computer program. The above method embodiments are implemented when the computer program is executed by the processor.

That is to say, those skilled in the art may understand that all or some of the steps of the methods in the above embodiments may be realized by a program instructing related hardware. The program is stored in a storage medium, which includes several instructions for enabling a device (which may be a single chip microcomputer, a chip, and the like) or a processor to perform all or some of the steps of the methods described in the embodiment of the present disclosure. The above storage medium includes any medium that can store program codes, such as a USB flash disk, a removable hard disk, a read-only memory (ROM), a random access memory (RAM), a magnetic disk, or an optical disk.

Those of ordinary skill in the art may understand that the above embodiments are specific embodiments for implementing the present disclosure, however in the actual application, various changes may be made in forms and details without departing from the spirit and scope of the present disclosure.

## Claims

1. A method for updating a service system, comprising:
acquiring training language materials generated by the service system in a service process, and storing the training language materials in a corpus; and
updating the service system after it is determined that data in the corpus meets a first preset requirement; wherein the first preset requirement is that the data in the corpus is greater than a first threshold, or the data in the corpus grows faster than a second threshold.

2. The method for updating the service system according to claim 1, wherein a service component of the service system comprises a business component, and the corpus comprises a knowledge corpus; and
acquiring the training language materials generated by the service system in the service process, and storing the training language materials in the corpus specifically comprises:
extracting first request data and first matching data from a first data set of the business component, wherein the first matching data comprises first question data and/or first answer data which match/matches the first request data in the business component;
determining the training language materials according to the first request data and the first matching data that are extracted; and
storing the training language materials in the knowledge corpus.

3. The method for updating the service system according to claim 2, wherein determining the training language materials according to the first request data and the first matching data that are extracted comprises:
auditing the first request data and the first matching data that are extracted;
judging whether audit is passed;
determining that a first label of the first request data that is extracted indicates that the first request data fails to be matched, if it is judged that the audit is not passed; and using the first request data that is extracted, the first matching data of the first request data that is extracted, and the first label of the first request data that is extracted as the training language materials.

4. The method for updating the service system according to claim 3, wherein the first request data that is extracted comprises request data to which the business component fails to respond;
if it is judged that the audit is passed, the method for updating the service system further comprises:
determining that the first label of the first request data that is extracted indicates that the first request data is successfully matched; and
using the first request data that is extracted, the first matching data of the first request data that is extracted, and the first label of the first request data that is extracted as the training language materials.

5. The method for updating the service system according to claim 3, wherein the service component of the service system further comprises an intent classification component, and the corpus further comprises an intent classification corpus; and
before determining that the first label of the first request data that is extracted indicates that the first request data fails to be matched, the method for updating the service system further comprises:
judging whether the first request data that is extracted is correctly classified;
auditing the first request data and the first matching data that are extracted if it is judged that the first request data that is extracted is correctly classified; or
determining that a second label of the first request data that is extracted indicates that the first request data is a non-business class request, if it is judged that the first request data that is extracted is incorrectly classified; and storing the first request data that is extracted and a second label of the first request data that is extracted in the intent classification corpus.

6. The method for updating the service system according to claim 2, wherein after storing the training language materials in the knowledge corpus, the method for updating the service system further comprises:
re-extracting the first request data from the first request data that fails to be responded and storing the first request data that is re-extracted in the knowledge corpus, if it is determined that first request data that is successfully matched in the knowledge corpus is more than the first request data that fails to be matched; and
re-extracting the first request data from the first request data that is successfully responded and storing the first request data that is re-extracted in the knowledge corpus, if it is determined that first request data that is successfully matched in the knowledge corpus is less than first request data that fails to be matched.

7. The method for updating the service system according to claim 2, wherein a working process of the business component comprises: acquiring business request data; preprocessing the business request data; and inputting the business request data that is preprocessed into a matching module to obtain business answer data; wherein the matching module is determined according to training request data and training answer data.

8. The method for updating the service system according to claim 7, wherein a process that the business component preprocesses the business request data comprises:
cleaning the business request data; and
extracting a feature of the business request data that is cleaned to obtain a sentence vector or a word vector of the business request data.

9. The method for updating the service system according to claim 2, wherein the business component comprises a matching model, and the matching model comprises T matching sub-models, wherein T is a positive integer greater than 1; and a processing logic of the matching model comprises:
using an input of the matching model as an input of a 1^{th} matching sub-model, using an output of an *i*^{th} matching sub-model as an input of an (*i*+1)^{th} matching sub-model, and using an output of a *T*^{th} matching sub-model as an output of the matching model, wherein 1 ≤ i < T; or
inputting the input of the matching model into the T matching sub-models respectively, and determining the output of the matching model according to the output of the T matching sub-models.

10. The method for updating the service system according to claim 9, wherein in the T matching sub-models, matching algorithms of M matching sub-models are fuzzy matching algorithms, and matching algorithms of N matching sub-models are precise matching algorithm, wherein M and N are positive integers, and M + N = T.

11. The method for updating the service system according to claim 5, wherein updating the service system comprises:
determining a question to be extended according to the first request data of which the first label indicates that matching fails in the knowledge corpus;
acquiring answer data corresponding to the question to be extended; and
updating the knowledge corpus of the business component according to the question to be extended and the answer data corresponding to the question to be extended.

12. The method for updating the service system according to claim 1, wherein a service component of the service system comprises a non-business component, and the corpus comprises a non-business template corpus; and
acquiring the training language materials generated by the service system in the service process and storing the training language materials in the corpus comprises:
acquiring second request data to which the non-business component fails to respond;
auditing the second request data and the second answer data corresponding to the second request data; and
storing the second request data and the second answer data in the non-business template corpus if audit of the second request data and the second answer data is passed.

13. The method for updating the service system according to claim 12, wherein the service component of the service system further comprises an intent classification component, and the corpus further comprises an intent classification corpus; and
if the audit of the second request data and the second answer data is not passed, the method for updating the service system further comprises:
judging whether intent classification of the second request data is incorrect; and
determining that a second label of the second request data indicates that the second request data is a business class request and storing the second request data and the second label of the second request data in the intent classification corpus, if the intent classification of the second request data is incorrect.

14. The method for updating the service system according to claim 12, wherein a working process of the non-business component comprises: acquiring non-business request data; preprocessing the non-business request data; and matching the non-business request data that is preprocessed with a template in the non-business template corpus; and responding to the non-business request data according to a matching result.

15. The method for updating the service system according to claim 5 or 13, wherein a working process of the intent classification component comprises: performing the intent classification on request data that is received; calling the business component if the request data is identified as the business class request; or calling the non-business component if the request data is identified as the non-business class request.

16. The method for updating the service system according to claim 15, wherein the intent classification component comprises an intent classification model, and a process that the intent classification component performs the intent classification on the request data that is received comprises:
inputting the request data that is received into the intent classification model; wherein an unknown parameter in the intent classification model is obtained through training according to training data, and the training data comprises training request data as an input and a second label of the training request data as an output; and
determining that the request data that is received is the business class request or the non-business class request according to the output of the intent classification model.

17. The method for updating the service system according to claim 1, wherein the training language materials comprises third request data received by the service system, and the corpus is a request data set; and
updating the service system comprises:
calling a data mining algorithm to perform data mining on a second data set so as to obtain a first mining result, wherein the second data set is a sampling data set of a third data set, and the third data set comprises all the third request data generated by the service system in the service process;
feeding back the first mining result obtained through the data mining algorithm to a developer;
determining the data mining algorithm selected by the developer;
calling the data mining algorithm that is selected to perform the data mining on the third data set so as to obtain a data mining component; and
updating the service system to enable the service system that is updated to call the data mining component.

18. The method for updating the service system according to claim 17, wherein before calling the data mining algorithm to perform the data mining on the second data set so as to obtain the first mining result, the method for updating the service system further comprises:
determining text data generated by the service system in the service process according to a log file of the service system;
cleaning the text data; and
determining the third data set according to the text data that is cleaned.

19. The method for updating the service system according to claim 18, wherein after determining the third data set according to the text data that is cleaned and before calling the data mining algorithm to perform the data mining on the second data set so as to obtain the first mining result, the method for updating the service system further comprises:
extracting the third request data from the third data set according to a preset extraction rule; and
determining the second request data set according to the third request data that is extracted.

20. The method for updating the service system according to claim 17, wherein the data mining component comprises: any one or any combination of a user portrait mining component, a service quality mining component, a user behavior prediction component, a real-time hot spot tracking component, a sentence pattern template collection component, an expansion component, and a human intervention alarm component.

21. The method for updating the service system according to claim 20, wherein:
a working process of the user portrait mining component comprises: mining input data of the user portrait mining component through a knowledge graph algorithm or a keyword extraction algorithm to obtain a third mining result; and determining user portraits of each user according to the third mining result;
the working process of the service quality mining component comprises: analyzing the input data of the service quality mining component through a word vector characterizing transfer learning algorithm or a classifier based on a self-attention mechanism to determine an emotion score of the input data of the service quality mining component; and determining a quality score of the service system according to the emotion score;
the working process of the user behavior prediction component comprises: analyzing the input data of the user behavior prediction component through a time sequence prediction algorithm to obtain behavior pattern information of each user; and predicting behavior information of each user based on the behavior pattern information of each user;
the working process of the real-time hot spot tracking component comprises: extracting a keyword in the input data of the real-time hot spot tracking component through the keyword extraction algorithm; and determining a hotspot question in the input data of the real-time hot spot tracking component according to the keyword that is extracted;
the working process of the sentence pattern template collection component comprises: matching the input data of the sentence pattern template collection component with a target sentence pattern to obtain matching data that matches the target sentence pattern; and determining an extended sentence pattern template according to the matching data;
the working process of the human intervention alarm component comprises: monitoring a preset monitoring parameter, and performing a preset operation corresponding to the monitoring parameter when the monitoring parameter meets a second preset requirement corresponding to the monitoring parameter; wherein the monitoring parameter comprises the quality score of the service system; and a preset operation corresponding to the quality score of the service system comprises: switching the service system to human service; and
the working process of the expansion component comprises: acquiring data of any one or any combination of the behavior information of each user predicted by the user behavior prediction component, the hotspot question determined by the real-time hot spot tracking component, and the sentence pattern template collected by the sentence pattern template collection component; determining expansion data and the corpus corresponding to the expansion data according to the data that is acquired; and archiving the expansion data into the corpus corresponding to the expansion data.

22. An electronic device, comprising:
at least one processor; and
a memory in communicative connection with the at least one processor, wherein the memory stores instructions executable by the at least one processor, and the instructions are executed by the at least one processor to cause the at least one processor to perform the method for updating the service system according to any of claims 1 to 21.

23. A computer readable storage medium storing a computer program, wherein the computer program performs, when executed by a processor, performs the method for updating the service system according to any of claims 1 to 21.
